# EUROPÄISCHE PATENTSCHRIFT

(11) **EP 3 302 831 B1**
(45) Veröffentlichungstag und Bekanntmachung des Hinweises auf die Patenterteilung: **05.12.2018**
(21) Anmeldenummer: 16726054.6
(22) Anmeldetag: 20.05.2016
(51) Int. Cl.: B07C 5/344

(54) **VORRICHTUNG UND VERFAHREN ZUR FÖRDERUNG EINES PRODUKTSTROMS AUS POLYSILICIUMBRUCH ODER POLYSILICIUMGRANULAT MIT WIRBELSTROMDETEKTION**
DEVICE AND METHOD FOR CONVEYING A STREAM OF BULK OR GRANULATE POLYSILICIUM USING EDDY CURRENT DETECTION
DISPOSITIF ET PROCÉDÉ DE CONVOYAGE D'UN FLUX DE POLYSILICIUM EN VRAC OU GRANULÉ AVEC DETECTION À COURANTS DE FOUCAULT

(30) Priorität: 26.05.2015 DE 102015209589
(43) Veröffentlichungstag der Anmeldung: 11.04.2018
(73) Patentinhaber: Wacker Chemie AG, 81737 München (DE)
(72) Erfinder: GRUEBL, Peter, 94428 Eichendorf (DE); BRIXEL, Martin, 84375 Kirchdorf (DE); FICHTNER, Thomas, 84489 Burghausen (DE); HITZENBERGER, Max, 84367 Reut (DE)
(74) Vertreter: Potten, Holger
(86) Internationale Anmeldenummer: PCT/EP2016/061470
(87) Internationale Veröffentlichungsnummer: WO 2016/188917

(56) Entgegenhaltungen:
- WO-A1-2011/082728

## Beschreibung

Die Erfindung bezieht sich auf eine Vorrichtung zur Förderung eines Produktstroms aus Polysiliciumbruch oder Polysiliciumgranulat. Insbesondere handelt es sich um eine Vorrichtung, um metallische Fremdkörper in einem solchen Produktstrom zu erkennen.

Polykristallines Silicium (kurz: Polysilicium) dient als Ausgangsmaterial zur Herstellung von einkristallinem Silicium für Halbleiter nach dem Czochralski(CZ)- oder Zonenschmelz(FZ)-Verfahren, sowie zur Herstellung von ein- oder multikristallinem Silicium nach verschiedenen Zieh- und Gieß-Verfahren zur Produktion von Solarzellen für die Photovoltaik.

Polykristallines Siliciumgranulat oder kurz Polysiliciumgranulat wird in einem Wirbelschichtreaktor produziert. Dies geschieht durch Fluidisierung von Siliciumpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases erfolgt eine Pyrolysereaktion an der heißen Partikeloberfläche. Dabei scheidet sich elementares Silicium auf den Siliciumpartikeln ab und die einzelnen Partikel wachsen im Durchmesser an. Durch den regelmäßigen Abzug von angewachsenen Partikeln und Zugabe kleinerer Siliciumpartikel als Keimpartikel kann das Verfahren kontinuierlich mit allen damit verbundenen Vorteilen betrieben werden. Als siliciumhaltiges Eduktgas können Silicium-Halogenverbindungen (z.B. Chlorsilane oder Bromsilane), Monosilan (SiH₄), sowie Mischungen dieser Gase mit Wasserstoff zum Einsatz kommen.

Das Polysiliciumgranulat wird üblicherweise nach dessen Herstellung mittels einer Siebanlage in zwei oder mehr Fraktionen oder Klassen geteilt (Klassierung).
Die kleinste Siebfraktion (Siebunterkorn) kann anschließend in einer Mahlanlage zu Keimpartikeln verarbeitet und dem Reaktor zugegeben werden.

Die Siebzielfraktion wird üblicherweise verpackt und zum Kunden transportiert. Der Kunde verwendet das Polysiliciumgranulat u.a. zum Züchten von Einkristallen nach dem Czochralski-Verfahren (Cz-Verfahren).

Ebenso kann polykristallines Silicium mittels des Siemens-Verfahrens hergestellt werden. Bei diesem Verfahren werden in einem glockenförmigem Reaktor ("Siemens-Reaktor") Trägerkörper, üblicherweise dünne Filamentstäbe aus Silicium, durch direkten Stromdurchgang erhitzt und ein Reaktionsgas enthaltend Wasserstoff und eine oder mehrere siliciumhaltige Komponenten eingeleitet.

Üblicherweise wird als siliciumhaltige Komponente Trichlorsilan (SiHCl₃, TCS) oder eine Mischung von Trichlorsilan mit Dichlorsilan (SiH₂Cl₂, DCS) und/oder mit Tetrachlorsilan (SiCl₄, STC) eingesetzt. Seltener, aber auch im industriellen Maßstab wird Silan (SiH₄) verwendet.

Die Filamentstäbe stecken senkrecht in am Reaktorboden befindlichen Elektroden, über die der Anschluss an die Stromversorgung erfolgt.

An den erhitzten Filamentstäben und der waagrechten Brücke scheidet sich hochreines Polysilicium ab, wodurch deren Durchmesser mit der Zeit anwächst.

Nach Abkühlung der Stäbe wird die Reaktorglocke geöffnet und die Stäbe werden per Hand oder mit Hilfe von speziellen Vorrichtungen, sogenannten Ausbauhilfen zur Weiterverarbeitung bzw. zur zwischenzeitlichen Lagerung entnommen.

Für die meisten Anwendungen werden polykristalline Siliciumstäbe auf kleine Stücke (Polysiliciumbruch) gebrochen, welche üblicherweise anschließend nach Größen klassiert werden.

US 2007/235574 A1 offenbart eine Vorrichtung zum Zerkleinern und Sortieren von polykristallinem Silicium, umfassend eine Aufgabeeinrichtung für einen Polysilicium-Grobbruch in eine Brecheranlage, die Brecheranlage, und eine Sortieranlage zum Klassieren des Polysilicium-Bruchs, wobei die Vorrichtung mit einer Steuerung versehen ist, die eine variable Einstellung mindestens eines Brechparameters in der Brecheranlage und/oder mindestens eines Sortierparameters in der Sortieranlage ermöglicht.
Bei der Brecheranlage kann es sich um eine mehrstufige Brecheranlage bestehend aus 1 bis 10 Brechern handeln.
Die Sortieranlage kann aus einer mehrstufigen mechanischen Siebanlage und einer mehrstufigen optoelektronischen Trennanlage bestehen. Die mechanische Siebanlage dient zur Abtrennung von Feinanteilen im Produktstrom. Der von Feinanteilen befreite Polysilicium-Bruch wird mittels einer optoelektronischen Trennanlage sortiert. Die Sortierung des Polysilicium-Bruchs erfolgt nach ein bis drei der Kriterien ausgewählt aus der Gruppe Länge, Fläche, Form, Morphologie, Farbe und Gewicht der Polysilicium-Bruchstücke.
Andere Kombinationen bekannter elektronischer Sensortechniken für die Parametererkennung der Polysilicium-Bruchstücke sind jedoch ebenso geeignet (z. B. Metalldetektor, Ultraschall, Infrarot).
Zwischen den einzelnen Brecherstufen sowie innerhalb und nach den Sortieranlagen können Magnetabscheider (z. B. Plattenmagneten, Trommelmagneten oder Bandmagneten) angeordnet werden, um metallische Fremdkörper aus dem Polysilicium-Bruch zu entfernen und die Metallkontamination des Polysilicium-Bruchs zu reduzieren.

Nachteilig ist, dass sich nur ferromagnetische Fremdkörper wie Eisen entfernen lassen. Nicht-magnetische metallische Fremdkörper lassen sich nicht abtrennen.

US 2005/034430 A1 offenbart eine Vorrichtung umfassend eine Förderrinne für den Polysiliciumbruch, eine Wägevorrichtung für den Polysiliciumbruch, mit einem Trichter, Ablenkbleche, eine Abfüllvorrichtung, welche aus einer hochreinen Kunststofffolie einen Kunststoffbeutel formt, eine Verschweissvorrichtung für den mit Polysiliciumbruch gefüllten Kunststoffbeutel, eine oberhalb von Förderrinne, Wägevorrichtung, Abfüllvorrichtung und Verschweissvorrichtung angebrachte Flowbox, die eine Partikelverunreinigung des Polysiliciumbruchs verhindert, ein Förderband für den verschweissten mit Polysiliciumbruch gefüllten Kunststoffbeutel,
wobei alle Bauteile, die mit dem Polysiliciumbruch in Kontakt kommen, mit Silicium armiert oder mit einem hochverschleissfestem Kunststoff verkleidet sind.
Der Polysiliciumbruch wird auf einer mit Silicium armierten Förderrinne zu einer Wägevorrichtung transportiert, wobei sich der Polysiliciumbruch aus dem Trichter in einen Kunststoffbeutel entleert, der Kunststoffbeutel nach dem Befüllen verschweißt und der mit Polysiliciumbruch gefüllte Kunststoffbeutel über ein Förderband durch einen magnetisch induktiven Detektor geführt wird, um mögliche Metallkontamination zu detektieren.
Nachteilig ist, dass die metallischen Fremdkörper erst nach dem Verpacken detektiert werden können.
CN 202052624 U beschreibt eine Sortiervorrichtung zum Trennen von Metallen oder hochdotiertem Silicium von normalem Silicium.
Das Material befindet sich in einem Produktspeicher. Der Produktspeicher ist mit einer Detektionseinrichtung enthaltend Wirbelstromsensoren und einen Abtrennmechanismus verbunden. Optional kann innerhalb der Detektionseinrichtung ein Förderband vorhanden sein, um das Silicium zu fördern.
Die Wirbelstromdetektionsvorrichtung leitet gegebenenfalls ein Signal an den Trennmechanismus weiter, so dass eine automatische Abtrennung von Metallen oder hochdotiertem Silicium erfolgt.

WO-A-2011/082728 zeigt eine Vorrichtung zur Förderung eines Produktstroms aus Polysiliciumbruch oder Polysiliciumgranulat, umfassend eine Förderfläche aus Metall, mit Wirbelstromsensoren zur Detektion von metallischen oder elektrisch leitfähigen Fremdkörpern im Produktstrom.

Für metallische Förderrinnen wäre die beschriebene Anordnung wegen Störeinflüssen auf die Wirbelstromsensoren nicht geeignet. Eine Detektion von Metallen in einem Produktstrom enthaltend Polysilicium wäre somit nicht möglich.
Aus der geschilderten Problematik ergab sich die Aufgabenstellung der Erfindung.
Die Aufgabe wird gelöst durch eine Vorrichtung zur Förderung eines Produktstroms aus Polysiliciumbruch oder Polysiliciumgranulat, umfassend eine Förderfläche aus Metall, die mit Kunststoff oder mit Silicium ausgekleidet ist, sowie Wirbelstromsensoren zur Detektion von metallischen oder elektrisch leitfähigen Fremdkörpern im Produktstrom.

Mit einer solchen Vorrichtung, im Folgenden auch als Fördereinrichtung bezeichnet, lassen sich metallische Fremdkörper jeglicher Art, auch nicht-magnetische erkennen.

Zudem kann ein Produktstrom mit Polysilicium bereits vor dem Verpacken hinsichtlich metallischer Fremdkörper untersucht werden.

Prinzipiell kann jede Anlage (auch metallische Anlagen) bei der Herstellung von Polysilicium mit einer solchen Vorrichtung auf relativ einfache Art und Weise nachgerüstet werden.

Bestehend Anlagen oder Auskleidungsmaterialien müssen nicht angepasst werden.

Die Reinheit von Polysilicium wird durch die Verwendung der erfindungsgemäßen Vorrichtung nicht beeinträchtigt.

Die Aufgabe wird auch gelöst durch ein Verfahren zur Erkennung von metallischen oder elektrisch leitfähigen Fremdkörpern in einem Produktstrom aus Polysiliciumbruch oder Polysiliciumgranulat, wobei der Produktstrom auf einer mit Kunststoff oder mit Silicium ausgekleideten metallischen Förderfläche einer erfindungsgemäßen Vorrichtung bewegt wird, wobei die Detektion der Fremdkörper mittels Wirbelstromsensoren erfolgt.

In einer Ausführungsform handelt es sich bei der Fördereinrichtung um eine herkömmliche Transportrinne oder -anlage, vorzugweise eine Vibrationsförderrinne, die einen Fördertrog oder Rinnentrog umfasst, der die Förderfläche bildet und der mit Kunststoff oder Silicium ausgekleidet ist. Die Auskleidung dient dazu, den auf dem Förder- oder Rinnentrog bewegten Polysilicium-Produktstrom vor Kontaminationen zu schützen, zumal die Förderfläche aus Metall besteht.

In einer Ausführungsform sind die Wirbelstromsensoren zur Detektion der Fremdkörper unmittelbar in den Förder- oder Rinnentrog eingebaut, nämlich unterhalb dessen Kunststoff- oder Siliciumauskleidung.

In einer Ausführungsform besitzen die Wirbelstromsensoren einen modularen Aufbau, umfassend ein Gehäuseoberteil, ein Gehäusemittelteil und ein Gehäuseunterteil.
Im Gehäusemittelteil können die Sensoren befestigt werden. Über das Gehäuseunterteil wird die Verkabelung für die Sensoren in das Gehäuse geführt. Das Gehäuseoberteil dient zur Abdeckung der Sensoren. Zudem kann am Gehäuseoberteil die Auskleidung des Förder- oder Rinnentrogs fixiert werden. Der modulare Aufbau des Gehäuses erleichtert es, die Sensoren, Gehäuseteile usw. zu wechseln. Das Gehäuseunterteil kann eine eingeschweißte VA-Platte zum Abgleich der Sensoren sowie mehrere Kabeleinführstutzen umfassen. Die Kabeleinführstutzen dienen dazu, die Sensorkabel in das Gehäuse zu führen. Das mittlere Gehäuseteil dient zur Befestigung der Sensoren und zur Einbettung der Sensorkabel. Das Gehäuseoberteil ist unmittelbar über den Sensoren angeordnet, dient zur Abdeckung der Sensoren und zur Befestigung der Auskleidung. Das 3-teilige Gehäuse wird vorzugsweise mittels Schraubverbindungen staubdicht zusammengefügt.

In einer bevorzugten Ausführungsform sind die Wirbelstromsensoren in einem einteiligen, elektrisch nicht leitfähigen Gehäuse befestigt. Vorzugsweise ist die Detektionsfläche des Sensors aus Verschleiß- und Kontaminationsgründen mit einem hoch festen, nicht leitfähigen Material geschützt. Zudem kann am Gehäuse die Auskleidung des Förder- oder Rinnentrogs fixiert werden. Der Wechsel der Sensorik kann ohne Demontage des Gehäuses einzeln von der Unterseite der Fördereinheit durchgeführt werden.

In einer anderen Ausführungsform handelt es sich beim Gehäuse um ein für Staub undurchlässiges Kunststoffgehäuse.

In einer Ausführungsform sind zudem seitliche Auskleidungen des Förder- oder Rinnentrogs vorhanden. Die Auskleidungen bestehen aus nichtleitenden Materialien, beispielsweise Kunststoff, Silicium oder Keramik. Bevorzugt ist die Verwendung von PU.

In einer Ausführungsform sind mehrere Wirbelstromsensoren in einer Reihe und quer zur Richtung des Produktstroms angeordnet. In einer anderen, bevorzugten Ausführungsform sind mehrere Wirbelstromsensoren in mehreren Reihen quer und in Richtung des Produktstroms zueinander versetzt angeordnet.

Um Störeinflüsse zu vermeiden, sollte ein bestimmter Mindestabstand S zwischen nächst benachbarten Sensoren vorhanden sein.

In einer Ausführungsform sind zwei oder mehr zueinander parallele Reihen von Wirbelstromsensoren quer zur Förderrichtung angeordnet.

Auf Grund der gegenseitigen Feldbeeinflussung, muss der Mindestabstand S in Abhängigkeit der Sensorintensität zwischen den einzelnen Sensoren eingehalten werden. Die nächst benachbarten Sensoren der zweiten Reihe haben ebenfalls den Mindestabstand S einzuhalten, wobei zu den Sensoren der ersten Reihe mindestens ein Abstand S vorhanden ist.

Die Detektionsgenauigkeit der Vorrichtung kann mittels des Versetzungswinkels α der Sensorreihen unter Berücksichtigung des Mindestabstands S zueinander und dessen Anzahl variiert werden.

Weiterhin kann die Detektionsgenauigkeit durch einen geringen Abstand zwischen Mittelachse Sensor und Mittelachse Fremdkörper erhöht werden. Die höchste Genauigkeit wird über einen Abstand = 0 erzielt.

In einer Ausführungsform wird die Fördereinrichtung über eine Auswerteelektronik abgeschaltet, wenn ein Fremdkörper detektiert wird.

In einer Ausführungsform ist das Gehäuse mit den darin befindlichen Sensoren am Förder- oder Rinnentrog der Fördereinrichtung montiert. Das Gehäuse befindet sich unterhalb der Auskleidung des Förder- oder Rinnentrogs. Die Befestigung erfolgt durch ein Verspannen der seitlichen Auskleidungsteile.

In einer Ausführungsform besteht das Gehäuse aus Kunststoff, bevorzugt aus Polyamid.

Ein gewisser Abstand zwischen Sensoren und Gehäuseoberteil sollte eingehalten werden. Dies stellt sicher, dass es nicht zu einer Beschädigung der Sensoren durch Schwingungen kommt.

Die Anzahl der Sensoren richtet sich nach der Rinnenbreite, der Sensorfeldlinienintensität, der Detektionsgenauigkeit- und Sicherheit.

Die Breite der Förderfläche bzw. die Rinnenbreite kann von 200 mm bis zu 2000 mm betragen. In einer Ausführung beträgt die Rinnenbreite 400-600 mm.

Je größer die Förderfläche, desto höher die Zahl der benötigten Sensoren.

Der Abstand S zwischen den Sensoren sollte so gewählt werden, dass keine gegenseitige Beeinträchtigung der benachbarten Wirbelstromsensoren auftritt.

Der Abstand S der Sensoren beträgt vorzugweise von 30 mm bis zu 200 mm, In einer Ausführung beträgt der Abstand S 80-120 mm.

Die Breite der seitlichen Auskleidung sollte so gewählt werden, dass keine Störeinflüsse der Feldlinien mit dem Rinnentrog entstehen.

Eine hohe Detektionssicherheit von kleineren metallischen oder elektrisch leitenden Fremdkörpern ist durch eine mehrere Sensorreihen umfassende Sensoranordnung zu erreichen, wobei die Sensorreihen quer zur Förderrichtung zueinander versetzt angeordnet sind. Dadurch wird die gesamte Förderfläche besser abgedeckt.
Aufgrund des Zwischenraums (Abstand S) zwischen zwei Sensoren der einen Reihe könnte ein mit dem Produktstrom geförderter kleiner Fremdkörper unentdeckt bleiben. Ist jedoch eine zweite Reihe mit Sensoren parallel zur ersten Reihe vorhanden, ist sichergestellt, dass auch dieser kleine Fremdkörper detektiert wird. Es können auch mehr als zwei Sensorreihen vorhanden sein, um eine noch bessere Detektionsgenauigkeit zu erreichen. Die bevorzugte Anzahl der Sensorreihen richtet sich dabei nach dem Sensorabstand S der ersten Reihe.
Ist eine zweite Reihe mit Sensoren parallel zur ersten Reihe vorhanden, so ist es bevorzugt, dass zumindest der Mindestabstand S zwischen den Sensoren eingehalten werden.
Um die Detektionsgenauigkeit zu steigern, können auch mehr als zwei Sensorreihen versetzt zur vorherigen Reihe vorhanden sein Die Anzahl der Sensorreihen beträgt vorzugweise bis zu 5. Die Versetzung der Reihen zueinander ist in Abhängigkeit der erforderlichen Detektionsgenauigkeit auszuführen.

Auf Grund unterschiedlicher Feldlinienausprägung innerhalb des Detektionsradius' eines Sensors und damit über einer Detektionsreihe, muss die Anordnung mehrerer Reihen so gewählt werden, dass die erforderliche Detektionsgenauigkeit über das Versetzen der nachfolgenden Reihen die notwendige Detektionssicherheit über die erforderliche Breite darstellt.

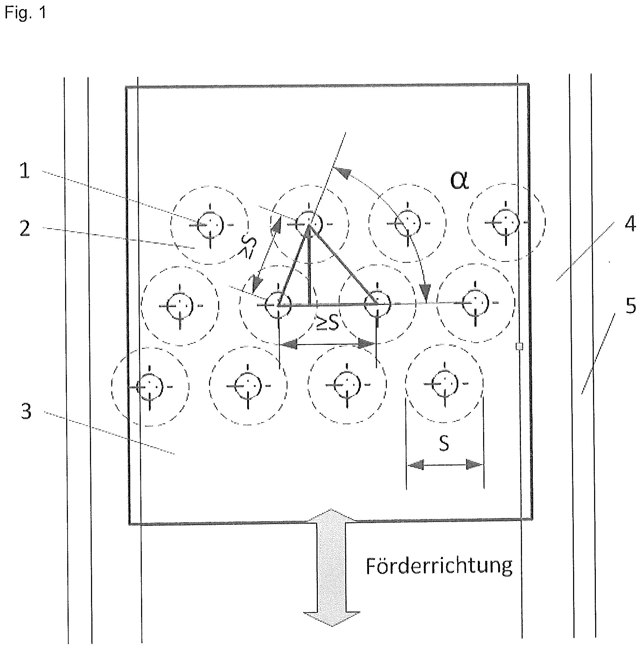

Daher wird in einer Ausführungsform die Sensoranordnung so gewählt, dass ein Dreieck mit den Mindestseitenlängen S entsteht wenn die Mittelpunkte von zwei nächst benachbarten Sensoren einer Reihe mit dem Mittelpunkt des gemeinsamen nächst benachbarten Sensors der anderen Reihe miteinander verbunden werden vgl. Fig. 1.

Die Auswertung der Wirbelstromsensoren kann durch ein Strom- vorzugweise durch ein Spannungsausgangsignal erfolgen.

Durch eine Änderung des Spannungssignals, hervorgerufen durch einen metallisch- oder elektrisch leitfähigen Fremdkörper, kann über eine Auswerteelektronik die Förderrinne gestoppt werden.

Die bezüglich der vorstehend aufgeführten Ausführungsformen des erfindungsgemäßen Verfahrens angegebenen Merkmale können entsprechend auf die erfindungsgemäße Vorrichtung übertragen werden. Umgekehrt können die bezüglich der vorstehend ausgeführten Ausführungsformen der erfindungsgemäßen Vorrichtung angegebenen Merkmale entsprechend auf das erfindungsgemäße Verfahren übertragen werden. Diese und andere Merkmale der erfindungsgemäßen Ausführungsformen werden in der Figurenbeschreibung und in den Ansprüchen erläutert. Die einzelnen Merkmale können entweder separat oder in Kombination als Ausführungsformen der Erfindung verwirklicht werden. Weiterhin können sie vorteilhafte Ausführungen beschreiben, die selbstständig schutzfähig sind.

### Kurzbeschreibung der Figuren

Fig. 1 zeigt schematisch eine Förderrinne mit integrierter Sensoreinheit, die quer zur Förderrichtung in zwei Reihen angeordnete Sensoren umfasst.

### Liste der verwendeten Bezugszeichen

- **1**: Sensor
- **2**: Intensität des Sensors
- **3**: Gehäuse
- **4**: Auskleidung
- **5**: Rinnentrog
- α: Versetzungswinkel

Fig. 1 zeigt ein am Rinnentrog 5 der Transporteinheit montiertes Gehäuse 3 mit Sensoren 1, die eine Intensität 2 aufweisen.

Der Abstand **S** zwischen den Sensoren **1** ist abhängig von deren Intensitäten **2** so gewählt, dass sich die Sensoren **1** nicht gegenseitig beeinflussen.

Durch die seitliche Auskleidung **4** werden das Gehäuse **3** und die Auskleidung des Rinnentrogs (nicht dargestellt) verspannt.

Dargestellt ist auch die Förderrichtung, in der sich der Produktstrom bewegt.
Es sind zwei Reihen mit Sensoren **1** vorhanden, die parallel zueinander und quer zur Förderrichtung angeordnet sind.

Die nächst benachbarten Sensoren **1** sind jeweils um den Weg **S** voneinander beabstandet.

Zudem ist eine Reihe um den Weg **S/2** quer zur Förderrichtung zu der anderen Reihe versetzt.

Die vorstehende Beschreibung beispielhafter Ausführungsformen ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren. Daher sollen alle derartigen Abänderungen und Modifikationen sowie Äquivalente durch den Schutzbereich der Ansprüche abgedeckt sein.

## Patentansprüche

1. Vorrichtung zur Förderung eines Produktstroms aus Polysiliciumbruch oder Polysiliciumgranulat, umfassend eine Förderfläche aus Metall, sowie Wirbelstromsensoren zur Detektion von metallischen oder elektrisch leitfähigen Fremdkörpern im Produktstrom, **dadurch gekennzeichnet, dass** die Förderfläche mit Kunststoff oder mit Silicium ausgekleidet ist.

2. Vorrichtung nach Anspruch 1, wobei sich die Wirbelstromsensoren in einem Gehäuse unterhalb der Auskleidung der Förderfläche befinden.

3. Vorrichtung nach Anspruch 2, umfassend seitliche Auskleidungen, mit denen Gehäuse und Auskleidung verspannt werden.

4. Vorrichtung nach einem der Ansprüche 1 bis 3, wobei die Wirbelstromsensoren in mehreren zueinander parallelen und voneinander beabstandeten Reihen in Querrichtung zum geförderten Produktstrom angeordnet sind.

5. Vorrichtung nach Anspruch 4, wobei wenigstens eine Reihe mit Wirbelstromsensoren gegenüber einer anderen Reihe mit Wirbelstromsensoren in Querrichtung versetzt angeordnet ist.

6. Vorrichtung nach Anspruch 4 oder nach Anspruch 5, wobei die Wirbelstromsensoren so angeordnet sind, dass ein Dreieck mit den Mindestseitenlängen S entsteht, wenn die Mittelpunkte von zwei nächst benachbarten Wirbelstromsensoren einer Reihe mit dem Mittelpunkt des gemeinsamen nächst benachbarten Wirbelstromsensoren der anderen Reihe miteinander verbunden werden.

7. Verfahren zur Erkennung von metallischen oder elektrisch leitfähigen Fremdkörpern in einem Produktstrom aus Polysiliciumbruch oder Polysiliciumgranulat, wobei der Produktstrom auf einer mit Kunststoff oder mit Silicium ausgekleideten metallischen Förderfläche einer Vorrichtung gemäß einem der Ansprüche 1 bis 6 bewegt wird, wobei die Detektion der Fremdkörper mittels Wirbelstromsensoren erfolgt.

8. Verfahren nach Anspruch 7, wobei die Vorrichtung über eine Auswerteelektronik abgeschaltet wird, wenn ein Fremdkörper detektiert wird.

## Claims

1. Apparatus for conveying a product stream of chunk polysilicon or granular polysilicon, comprising a conveying surface made of metal and eddy current sensors for detection of metallic or electrically conductive foreign objects in the product stream, **characterized in that** the conveying surface is lined with plastic or with silicon.

2. Apparatus according to Claim 1, wherein the eddy current sensors are situated in a housing below the lining of the conveying surface.

3. Apparatus according to Claim 2, comprising lateral linings to which the housing and lining are clamped.

4. Apparatus according to any of Claims 1 to 3, wherein the eddy current sensors are arranged in a plurality of parallel and spaced-apart rows transversely to the conveyed product stream.

5. Apparatus according to Claim 4, wherein at least one row of eddy current sensors is arranged transversely offset relative to another row of eddy current sensors.

6. Apparatus according to Claim 4 or according to Claim 5, wherein the eddy current sensors are arranged such that a triangle having the minimum side lengths S is formed when the central points of two nearest adjacent eddy current sensors of one row are connected to the central point of the common nearest adjacent eddy current sensor of another row.

7. Method of identifying metallic or electrically conductive foreign objects in a product stream of chunk polysilicon or granular polysilicon, wherein the product stream is moved on a plastic- or silicon-lined metallic conveying surface of an apparatus according to any of Claims 1 to 6, wherein the detection of the foreign objects is effected by means of eddy current sensors.

8. Method according to Claim 7, wherein the apparatus is switched off via evaluation electronics when a foreign object is detected.

## Revendications

1. Dispositif pour le transport d'un courant de produits constitué par du polysilicium fragmenté ou du polysilicium granulé, comprenant une surface de transport en métal, ainsi que des capteurs à courants de Foucault pour la détection de corps étrangers métalliques ou électriquement conducteurs dans le courant de produits, **caractérisé en ce que** la surface de transport est revêtue avec un plastique ou avec du silicium.

2. Dispositif selon la revendication 1, dans lequel les capteurs à courants de Foucault se trouvent dans un boîtier en dessous du revêtement de la surface de transport.

3. Dispositif selon la revendication 2, comprenant des revêtements latéraux, avec lesquels le boîtier et le revêtement sont haubanés.

4. Dispositif selon l'une quelconque des revendications 1 à 3, dans lequel les capteurs à courants de Foucault sont agencés en plusieurs séries parallèles les unes aux autres et espacées les unes des autres dans la direction perpendiculaire au courant de produits transporté.

5. Dispositif selon la revendication 4, dans lequel au moins une série de capteurs à courants de Foucault est agencée en décalage par rapport à une autre série de capteurs à courants de Foucault dans la direction perpendiculaire.

6. Dispositif selon la revendication 4 ou selon la revendication 5, dans lequel les capteurs à courants de Foucault sont agencés de telle sorte qu'un triangle ayant les longueurs de côtés minimales S soit formé lorsque les points centraux de deux capteurs à courants de Foucault adjacents d'une série sont reliés avec le point central du capteur à courants de Foucault adjacent commun de l'autre série.

7. Procédé de détection de corps étrangers métalliques ou électriquement conducteurs dans un courant de produits constitué par du polysilicium fragmenté ou du polysilicium granulé, selon lequel le courant de produits est déplacé sur une surface de transport métallique revêtue avec un plastique ou avec du silicium d'un dispositif selon l'une quelconque des revendications 1 à 6, la détection des corps étrangers ayant lieu au moyen de capteurs à courants de Foucault.

8. Procédé selon la revendication 7, selon lequel le dispositif est mis à l'arrêt par un système électronique d'exploitation lorsqu'un corps étranger est détecté.
